# EUROPEAN PATENT APPLICATION

(11) **EP 4 250 438 A1**
(43) Date of publication of application: **27.09.2023**
(21) Application number: 22195839.0
(22) Date of filing: 15.09.2022
(51) Int. Cl.: H01M 50/103, H01M 50/15, H01M 50/176, H01M 50/533, H01M 50/553, H01M 50/562

(54) **SECONDARY BATTERY**

(30) Priority: 25.03.2022 JP 2022049895
(71) Applicant: KABUSHIKI KAISHA TOSHIBA, Minato-ku Tokyo 105-0023 (JP)
(72) Inventor: Yamamoto, Kuniaki, Tokyo, 105-0023 (JP)
(74) Representative: Hoffmann Eitle

(57) **Abstract**

According to one embodiment, a secondary battery includes an outer container (12) having a lid body (14), an electrode assembly (30) including a current collecting tab (32a) and housed in the outer container, an output terminal (20) provided in the lid body, and a lead (40A) provided between the electrode assembly and the lid body to electrically connect the current collecting tab and the output terminal. The output terminal (20) includes a connection part (20c) that is exposed to the outside of the lid body (14) and connectable with a connection member, an exposed part (20E) exposed to the outside of the lid body, and a through hole (23) formed in the exposed part, and the exposed part is joined to the lead.

## Description

### FIELD

Embodiments described herein relate generally to a secondary battery.

### BACKGROUND

Secondary batteries having high energy density, for example, lithium ion secondary batteries are widely used as a power source for electronic devices and electric vehicles. Such secondary batteries are configured by housing an electrode assembly having a positive electrode and a negative electrode in a cuboid outer container. A lid body of the outer container is provided with a positive electrode output terminal and a negative electrode output terminal. The positive and negative electrode output terminals are respectively connected to the positive and negative electrodes of the electrode assembly via a positive electrode lead and a negative electrode lead provided in the outer container.

In these secondary batteries, the output terminals on the lid body and the leads of the electrode assembly are required to be connected with high positional accuracy.

### BRIEF DESCRIPTION OF THE DRAWINGS

FIG. 1 is a perspective view illustrating an appearance of a secondary battery according to a first embodiment.
FIG. 2 is an exploded perspective view of an outer container and an electrode assembly of the secondary battery.
FIG. 3A is a perspective view showing one end of a lid body.
FIG. 3B is a perspective view of an output terminal.
FIG. 4 is an exploded perspective view of the electrode assembly, leads, and an insulating spacer of the secondary battery.
FIG. 5 is a perspective view of one of the leads as viewed from an upper surface side.
FIG. 6 is a perspective view of one of the leads as viewed from a lower surface side.
FIG. 7 is a perspective view illustrating one of the leads and the outer container in a state where they are engaged with each other.
FIG. 8 is a cross-sectional view of an output terminal part of the secondary battery taken along line A-A of FIG. 1.
FIG. 9 is a cross-sectional view of the secondary battery taken along line B-B of FIG. 1.
FIG. 10 is a plan view schematically illustrating a secondary battery according to a second embodiment.

### DETAILED DESCRIPTION

Various embodiments will be described hereinafter with reference to the accompanying drawings. In general, according to one embodiment, a secondary battery comprises an outer container having a lid body; an electrode assembly including a current collecting tab and housed in the outer container; an output terminal provided in the lid body; and a lead provided between the electrode assembly and the lid body in the outer container to electrically connect the current collecting tab and the output terminal. The output terminal includes a connection part that is exposed to the outside of the lid body and connectable with a connection member, an exposed part exposed to the outside of the lid body, and a through hole formed in the exposed part, and the exposed part is joined to the lead.

The disclosure is merely an example, and proper changes within the spirit of the invention, which are easily conceivable by a skilled person, are included in the scope of the invention as a matter of course. In addition, in some cases, in order to make the description clearer, the widths, thicknesses, shapes, etc., of the respective parts are schematically illustrated in the drawings, compared to the actual modes. However, the schematic illustration is merely an example, and adds no restrictions to the interpretation of the invention. Besides, in the specification and drawings, the same or similar elements as or to those described in connection with preceding drawings or those exhibiting similar functions are denoted by like reference numerals, and a detailed description thereof is omitted unless otherwise necessary.

### (First embodiment)

A secondary battery according to a first embodiment will be described in detail.

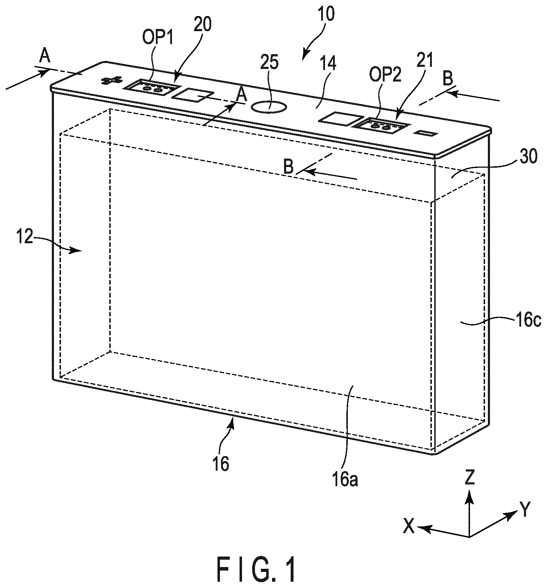

FIG. 1 is a perspective view illustrating an appearance of the secondary battery according to the first embodiment.

As shown in FIG. 1, the secondary battery 10 is, for example, a nonaqueous electrolyte secondary battery such as a lithium ion battery, and comprises an outer container 12 having a substantially cuboid shape, and an electrode assembly 30 described later housed in the outer container 12 together with a nonaqueous electrolytic solution. The outer container 12 is, for example, an outer can (battery case) made of synthetic resin.

The outer container 12 includes a container body 16 having an open upper end, and a rectangular plate-shaped lid body 14 welded or bonded to the container body 16 to close the upper opening of the container body 16 and make the outer container 12 airtight. The lid body 14 is provided with a pair of output terminals, namely, a positive electrode terminal 20 and a negative electrode terminal 21, and an inlet. The inlet is sealed with a disk-shaped sealing lid 25.

Here, a longitudinal direction of the lid body 14 and the container body 16 is defined as X, a width direction of the lid body 14 and the container body 16 orthogonal to the longitudinal direction X is defined as Y, and a height direction of the container body 16 is defined as Z.

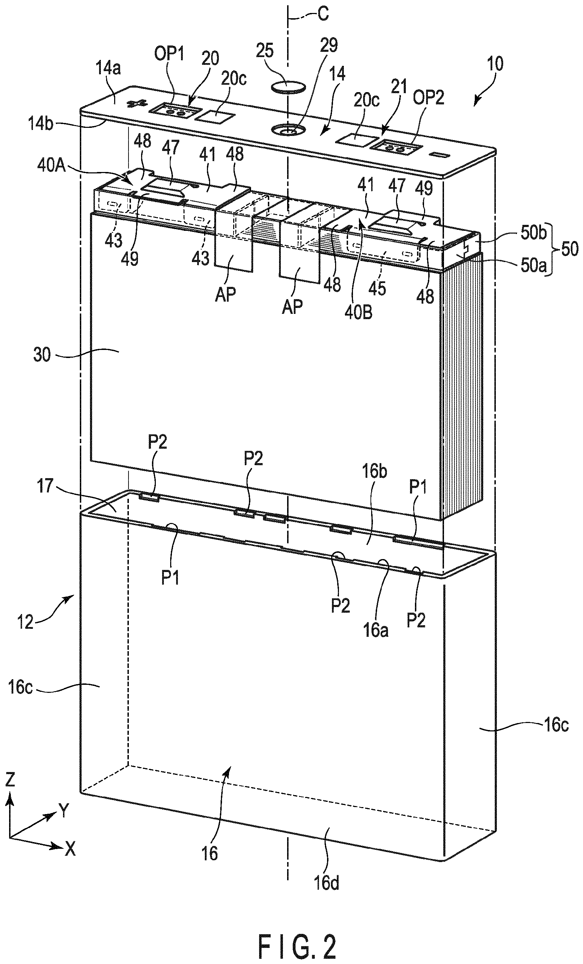

FIG. 2 is an exploded perspective view of the secondary battery showing the outer container and the electrode assembly in an exploded manner.

As shown in FIG. 2, the container body 16 has a rectangular long side wall 16a, a rectangular long side wall 16b facing and parallel to the long side wall 16a with a gap between them, a pair of short side walls 16c facing each other, and a bottom wall 16d. Upper edges of the pair of long side walls 16a and 16b and upper edges of the pair of short side walls 16c define a rectangular upper opening 17.

A plurality of recesses (cutouts) P1 and P2 are formed in the upper edge of each of the long side walls 16a and 16b. Each of the recesses P1 and P2 extends in the longitudinal direction X, and has an opening spanning the upper end surface and the inner surface of the corresponding long side wall 16a or 16b. For example, the length of the recess P1 in the longitudinal direction X is longer than the length of the recess P2 in the longitudinal direction X. The recesses P1 and P2 are provided at intervals in the longitudinal direction X. Ends of leads 40A and 40B described later are placed in the recesses P1 and P2.

The lid body 14 is formed in a rectangular plate shape having a size that covers the upper opening 17. An outer circumferential edge part of a lower surface of the lid body 14 is welded or bonded to the upper end surface of the container body 16 so that it is fixed to the container body 16 and closes the upper opening 17.

Rectangular openings OP1 and OP2 are formed in both ends of the lid body 14 in the longitudinal direction X. Each of the openings OP1 and OP2 is formed so as to penetrate the lid body 14 in the thickness direction Z. The positive electrode terminal 20 is embedded in one end of the lid body 14 in the longitudinal direction X. Part of the positive electrode terminal 20 is exposed on each of the upper surface 14a and the lower surface 14b of the lid body 14 through the opening OP1. Another part (connection part) 20c of the positive electrode terminal 20 is exposed on the upper surface of the lid body 14 next to the opening OP1 in the longitudinal direction X.

The negative electrode terminal 21 is embedded in the other end of the lid body 14 in the longitudinal direction X. Part of the negative electrode terminal 21 is exposed on the upper and lower surfaces 14a and 14b of the lid body 14 through the opening OP2. Another part (connection part) 20c of the negative electrode terminal 21 is exposed on the upper surface of the lid body 14 next to the opening OP2 in the longitudinal direction X.

An electrolytic solution inlet 29 is provided at about the center of the lid body 14 in the longitudinal direction X. The inlet 29 penetrates the lid body 14 in the thickness direction and has openings on the upper surface and the lower surface of the lid body 14. After the electrolytic solution is poured into the outer container 12 from the inlet 29, the inlet 29 is sealed by the sealing lid 25.

The positive and negative electrode terminals 20 and 21 will be described.

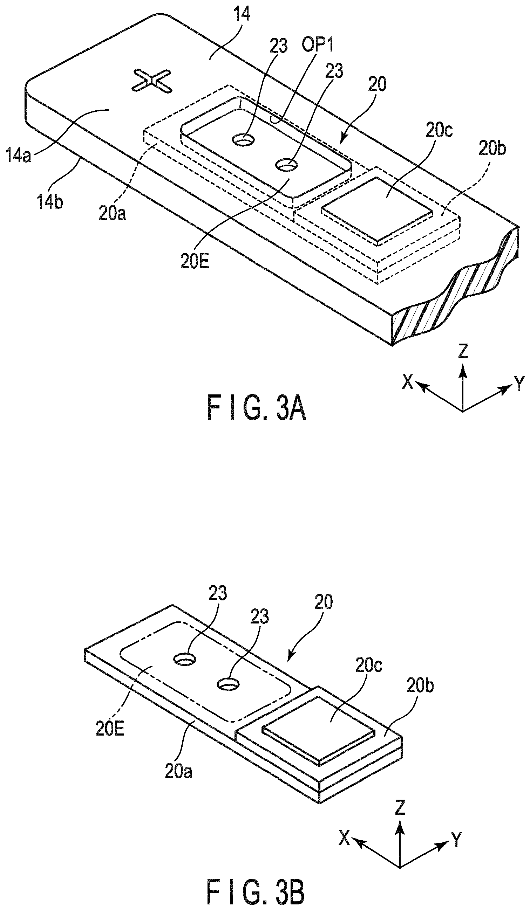

FIG. 3A is an enlarged perspective view showing one end of the lid body, and FIG. 3B is a perspective view of the positive electrode terminal serving as an output terminal. As shown in FIG. 3B, the positive electrode terminal 20 includes a rectangular plate-shaped first layer 20a and a rectangular plate-shaped second layer 20b laminated on one end of the first layer 20a in the longitudinal direction X. The first layer 20a is provided with two through holes 23 for positioning. The two through holes 23 are formed so as to penetrate the first layer 20a in the height direction Z, and have openings on the upper surface and the lower surface of the first layer 20a. The two through holes 23 are provided side by side in the longitudinal direction X. The second layer 20b is integrally provided with a rectangular protrusion (the connection part) 20c protruding in the height direction Z from the upper surface thereof.

The first layer 20a is made of a conductive metal that is the same as the material forming the leads described later, for example, titanium (Ti) or zinc (Zn). The second layer 20b is made of a metal material different from that of the first layer 20a, for example, aluminum, zinc, or the like. The material forming the second layer 20b is selected according to the material forming a connection member (bus bar) to be joined to the connection part 20c of the second layer 20b. For example, when the connection member is made of aluminum, the second layer 20b is also made of aluminum. In addition, in a case where the connection member is made of the same metal material as the leads, for example, titanium, the second layer 20b is integrally molded with the first layer 20a using titanium.

The other negative electrode terminal 21 is formed so as to have the same configuration and the same dimensions as the positive electrode terminal 20 described above.

As shown in FIG. 3A, the positive electrode terminal 20 is attached to the lid body 14 in a state where it is embedded in one end of the lid body 14. The first layer 20a is embedded to about the center of the lid body 14 in the thickness direction, and is parallel with the upper surface (outer surface) 14a and the lower surface 14b of the lid body 14. The first layer 20a extends in the longitudinal direction X across the opening OP1. A central part (exposed part) 20E of the first layer 20a including the two through holes 23 is exposed on the upper and lower surfaces 14a and 14b of the lid body 14 through the opening OP1 of the lid body 14.

The second layer 20b is embedded in the lid body 14, and only an upper surface of the connection part 20c is exposed on the upper surface 14a of the lid body 14. The upper surface of the connection part 20c is flat and substantially flush with the upper surface 14a of the lid body 14. The connection part 20c is positioned next to the opening OP1 in the longitudinal direction X and is on the negative electrode terminal 21 side with respect to the opening OP1.

As shown in FIG. 2, the negative electrode terminal 21 is embedded in the other end of the lid body 14 in the longitudinal direction X. The exposed part of the first layer is exposed on the upper surface of the lid body 14 through the opening OP2, and the connection part 20c of the second layer is exposed to the upper surface of the lid body 14.

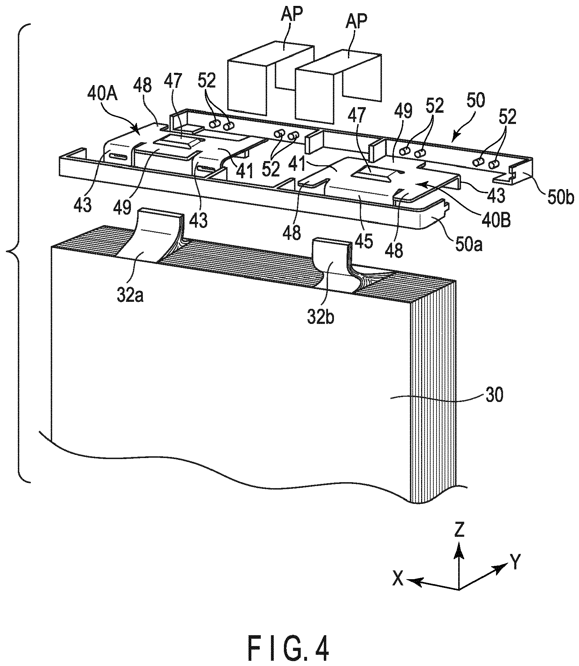

FIG. 4 is an exploded perspective view of the secondary battery showing the leads and an insulating spacer in an exploded manner.

As shown in FIGS. 2 and 4, the electrode assembly 30 housed in the outer container 12 is formed by, for example, stacking a plurality of sheet-shaped positive electrode plates and a plurality of sheet-shaped negative electrode plates alternately with a separator inserted between each pair of adjacent electrode plates. That is, in the present embodiment, a so-called stacked electrode assembly is used as the electrode assembly 30.

Each positive electrode plate includes a rectangular plate-shaped positive electrode current collector, a positive electrode active material layer formed on at least one surface of the current collector, and a strip-shaped positive electrode current collecting tab 32a extending from one end of the positive electrode current collector in the height direction Z. Each negative electrode plate includes a rectangular plate-shaped negative electrode current collector, a negative electrode active material layer formed on at least one surface of the current collector, and a strip-shaped negative electrode current collecting tab 32b extending from one end of the negative electrode current collector in the height direction Z. The separator having an electrical insulation property is sandwiched between the positive electrode plate and the negative electrode plate to electrically insulate them from each other.

In one example, the current collectors and the current collecting tabs of the positive and negative electrode plates are made of a metal foil having a thickness of about 5 to 50 µm. The material of the metal foil can vary depending on the types of the active materials used for the positive and negative electrodes, but for example, aluminum, an aluminum alloy, copper, or a copper alloy can be used.

As shown in FIG. 4, the positive electrode current collecting tabs 32a extend outward from one end of the electrode assembly (electrode group) 30, and are stacked in the thickness direction of the electrode assembly 30. Extended ends of the positive electrode current collecting tabs 32a may be clipped together by a backup lead (not illustrated) bent in a U shape. The positive electrode current collecting tabs 32a are located on one end side of the electrode assembly 30 in the longitudinal direction X.

The negative electrode current collecting tabs 32b extend outward from one end of the electrode assembly 30 in the same direction as the positive electrode current collecting tabs 32a, and are stacked in the thickness direction of the electrode assembly 30. Extended ends of the negative electrode current collecting tabs 32b may be clipped together by a backup lead (not illustrated) bent in a U shape. The negative electrode current collecting tabs 32b are located on the other end side of the electrode assembly 30 in the longitudinal direction X.

As described above, the positive electrode current collecting tabs 32a and the negative electrode current collecting tabs 32b extend in the same direction from one end of the electrode assembly 30, and are located apart from each other in the longitudinal direction X of the electrode assembly 30.

The electrode assembly 30 configured as described above is housed in the container body 16 in such an orientation that one end surface of the electrode assembly 30 and the positive and negative electrode current collecting tabs 32a and 32b are located on the lid body 14 side. The one end face of the electrode assembly 30 faces the lid body 14 with a certain gap between them.

As shown in FIGS. 2 and 4, the secondary battery 10 includes, in the outer container 12, a rectangular frame-shaped insulating member 50, the positive electrode lead 40A, and the negative electrode lead 40B provided in a space between the electrode assembly 30 and the lid body 14. The insulating member 50 has a plate-like shape and is made of an insulating material such as synthetic resin. In one example, the insulating member 50 is divided into a pair of insulating members 50a and 50b, and these insulating members 50a and 50b are joined to each other to form the rectangular frame shape. The insulating member 50 is in contact with an inner surface of the container body 16 and covers the entire circumferential area between the lid body 14 and the end surface of the electrode assembly 30.

The positive electrode lead 40A is disposed between the pair of insulating members 50a and 50b and faces the positive electrode current collecting tabs 32a. The positive electrode current collecting tabs 32a are welded and electrically connected to an extended part of the positive electrode lead 40A. The positive electrode lead 40A is connected to the positive electrode terminal 20. As a result, the positive electrode lead 40A electrically connects the positive electrode terminal 20 and the positive electrode current collecting tabs 32a.

The negative electrode lead 40B is disposed between the pair of insulating members 50a and 50b and faces the negative electrode current collecting tabs 32b. The negative electrode current collecting tabs 32b are welded and electrically connected to an extended part of the negative electrode lead 40B. The negative electrode lead 40B is connected to the negative electrode terminal 21. As a result, the negative electrode lead 40B electrically connects the negative electrode terminal 21 and the negative electrode current collecting tabs 32b.

In the following, the positive and negative electrode leads 40A and 40B will be described in detail.

In the present embodiment, the positive and negative electrode leads 40A and 40B have the same shape and the same dimensions. Here, the configuration of the positive electrode lead 40A will be described as a representative example.

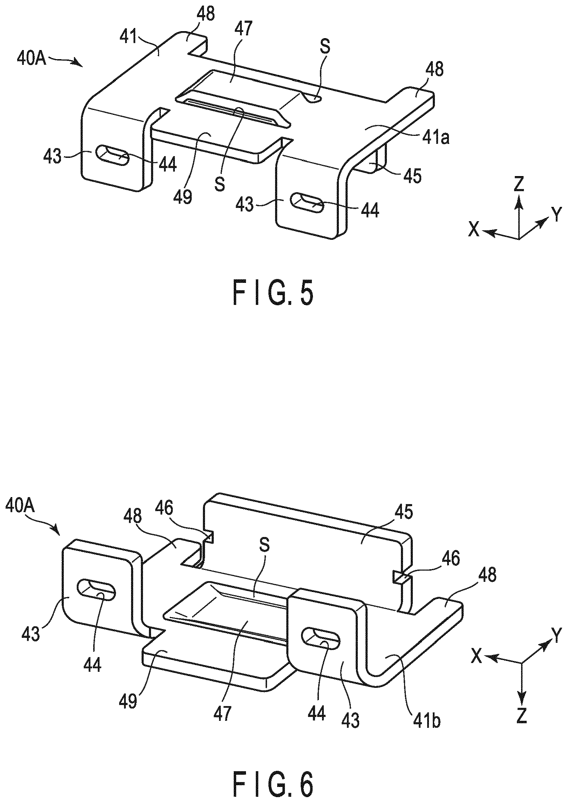

FIG. 5 is a perspective view showing an upper surface side of the positive electrode lead, and FIG. 6 is a perspective view showing a lower surface side of the positive electrode lead.

As shown in the drawings, the positive electrode lead 40A is formed by bending a conductive metal plate material, for example, a titanium (Ti) plate material. In one example, the positive electrode lead 40A is integrally provided with a substantially rectangular base part 41, a pair of rectangular first extended parts 43 that are substantially perpendicular to the base part 41 and each extending from a corresponding one of the two ends of one side edge of the base part 41 extending in the longitudinal direction X, a rectangular second extended part 45 that is substantially perpendicular to the base part 41 and extending from a central part of the other side edge of the base part 41 extending in the longitudinal direction X, a rectangular first engaging protrusion 49 that is parallel to the base part 41 and extending a predetermined length from the central part of the one side edge, and a pair of rectangular second engaging protrusions 48 that are parallel to the base part 41 and each extending a predetermined length from a corresponding one of the two ends of the other side edge. The pair of first extending parts 43 and the second extended part 45 extend in the same direction in the height direction Z. The first engaging protrusion 49 extends in one direction in the width direction Y, and the second engaging protrusions 48 extend in a direction opposite to that of the first engaging protrusion 49 in the width direction Y.

Two slits S extending in the longitudinal direction X are formed in the central part of the base part 41. An area of the base part 41 between the two slits S is extruded in the height direction Z so as to form a rectangular contacting part 47. That is, the contacting part 47 protrudes about a plate thickness upward from the upper surface (contacting surface) 41a of the base part 41. A length in the longitudinal direction X and a width in the width direction Y of the contacting part 47 are set to be slightly smaller than a length and a width of the opening OP1 (OP2) of the lid body 14 described above.

Each of the first extended parts 43 has an outer surface facing and parallel to the long side wall 16a of the container body 16. Each of the first extended parts 43 is formed with an elongated hole (receiving part) 44 extending in the longitudinal direction X and penetrating the first extended part 43.

The second extended part 45 has an outer surface facing and parallel to the long side wall 16b of the container body 16.

A pair of side edges of the second extended part 45 extending in the height direction Z are each provided with a recess (receiving part) 46. The current collecting tabs of the electrode assembly 30 are joined or welded to the inner surface of the second extended part 45.

The negative electrode lead 40B has the same shape and dimensions as those of the positive electrode lead 40A described above.

As shown in FIGS. 2 and 4, the positive electrode lead 40A having the above configuration is positioned between the insulating members 50a and 50b so that it faces the positive electrode terminal 20. The outer surfaces of the pair of first extended parts 43 of the positive electrode lead 40A come into contact with the inner surface of the insulating member 50a, and engaging pins 52 provided on the insulating member 50a engage with the elongated holes 44. The outer surface of the second extended part 45 of the positive electrode lead 40A comes into contact with the inner surface of the insulating member 50b, and engaging pins 52 provided on the insulating member 50b engage with the recesses 46. As a result, the positive electrode lead 40A is held by the insulating members 50a and 50b in a state where it is positioned with respect to the insulating member 50. The first engaging protrusion 49 is positioned so as to overlap an upper edge of the insulating member 50a. The pair of second engaging protrusions 48 are positioned so as to overlap an upper edge of the insulating member 50b.

The base part 41 and the contacting part 47 of the positive electrode lead 40A are positioned so that they face and are parallel to the inner surface of the lid body 14 and the positive electrode terminal 20. The extended ends of the positive electrode current collecting tabs 32a are joined to the inner surface of the second extended part 45.

The negative electrode lead 40B is disposed between the insulating members 50a and 50b and faces the negative electrode terminal 21. The negative electrode lead 40B is disposed in an orientation inverted 180 degrees with respect to that of the positive electrode lead 40A. The outer surfaces of the pair of first extended parts 43 of the negative electrode lead 40B come into contact with the inner surface of the insulating member 50b, and engaging pins 52 provided on the insulating member 50b engage with the elongated holes 44. The outer surface of the second extended part 45 of the negative electrode lead 40B comes into contact with the inner surface of the insulating member 50a, and engaging pins 52 provided on the insulating member 50a engage with the recesses 46. As a result, the negative electrode lead 40B is held by the insulating member 50 in a state where it is positioned with respect to the insulating members 50a and 50b. The first engaging protrusion 49 is positioned so as to overlap an upper edge of the insulating member 50b. The pair of second engaging protrusions 48 are positioned so as to overlap an upper edge of the insulating member 50a.

The base part 41 and the contacting part 47 of the negative electrode lead 40B are positioned so that they face and are parallel to the inner surface of the lid body 14 and the negative electrode terminal 21. The extended ends of the negative electrode current collecting tabs 32b are joined to the inner surface of the second extended part 45.

The insulating members 50a and 50b assembled together with the positive and negative electrode leads 40A and 40B sandwiched between them are attached to the electrode assembly 30 by an adhesive member, for example, two pieces of adhesive tape AP. Each piece of adhesive tape AP is laid over the insulating member 50, and one end of the piece of adhesive tape AP is applied to an upper part of one surface of the electrode assembly 30, and the other end is applied to an upper part of the other surface of the electrode assembly 30. As a result, the insulating member 50, the positive electrode lead 40A, and the negative electrode lead 40B are fixed and held on top of the upper end surface of the electrode assembly 30.

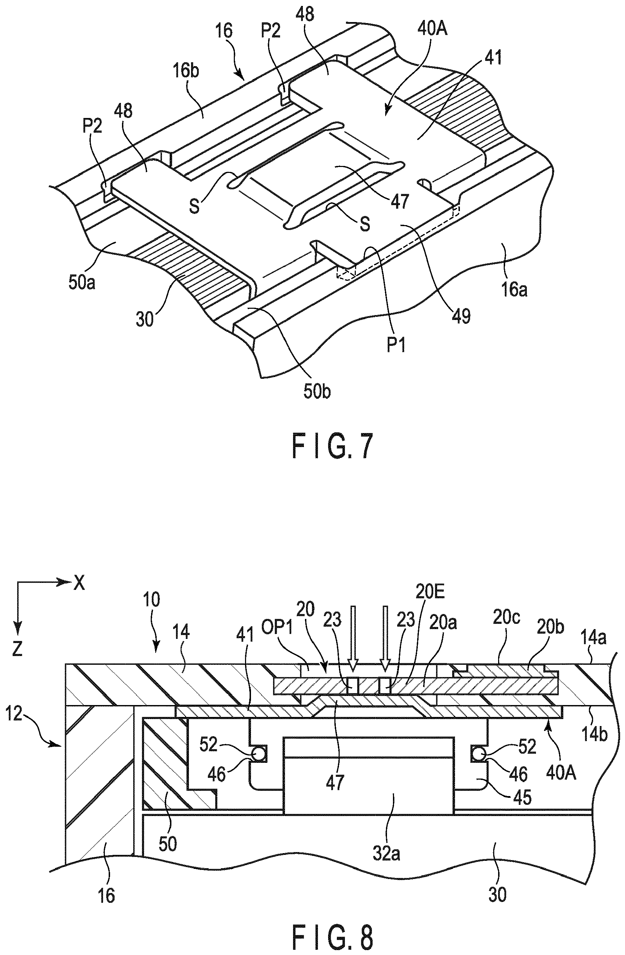

FIG. 7 is a perspective view showing the positive electrode lead 40A and the container body 16 in a state where they are engaged.

In a state where the electrode assembly 30 and the insulating member 50 are housed in the container body 16, the insulating member 50 lies between the upper opening 17 of the container body 16 and the upper end surface of the electrode assembly 30. An outer circumferential surface of the insulating member 50 is close to and faces the inner surface of the container body 16.

As shown in FIG. 7, an extended end of the first engaging protrusion 49 of the positive electrode lead 40A engages with a recess P1 formed in an upper edge of the long side wall 16a so that it is supported by the long side wall 16a. Extended ends of the pair of second engaging protrusions 48 engage with a pair of recesses P2 formed in an upper edge of the long side wall 16b so that they are supported by the long side wall 16b. In this way, the positive electrode lead 40A is supported by the long side walls 16a and 16b, and is positioned and held in place with respect to the container body 16.

Similarly, the engaging protrusions of the negative electrode lead 40B engage with recesses P1 and P2 in the long side walls 16a and 16b, so that the negative electrode lead 40B is positioned and held in place with respect to the container body 16.

Next, the internal configuration of the assembled secondary battery 10 will be described.

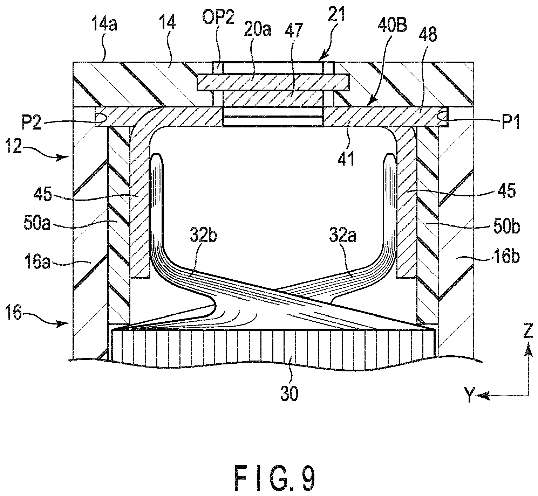

FIG. 8 is a cross-sectional view of the secondary battery 10 taken along line A-A in FIG. 1, and FIG. 9 is a cross-sectional view of the secondary battery 10 taken along line B-B in FIG. 1. As illustrated in the drawings, the lid body 14 is welded or bonded to the upper end of the container body 16. The base part 41 of the positive electrode lead 40A faces and is parallel to the inner surface of the lid body 14. The upper surface of the base part 41 comes into contact with the inner surface of the lid body 14, and the contacting part 47 is located inside the opening OP1 of the lid body 14 so that it comes into contact with a lower surface of the positive electrode terminal 20. More specifically, the contacting part 47 has characteristics of a spring that allow it to deform elastically in the height direction Z, and the positive electrode lead 40A is held and positioned in the height direction Z with respect to the insulating member 50 by the engaging pins 52 and the first and second engaging protrusions 49 and 48. Therefore, the contacting part 47 is elastically pressed against the positive electrode terminal 20 so that an upper surface (contacting surface) of the contacting part 47 comes into close contact with the lower surface of the first layer 20a of the positive electrode terminal 20.

The positive electrode terminal 20 is welded to the contacting part 47 by, for example, laser welding, to mechanically and electrically join it to the positive electrode lead 40A. When carrying out laser welding, the through holes 23 provided in the exposed part 20E of the positive electrode terminal 20 are used as marks for determining the laser irradiation position. As a result, a desired part of the positive electrode terminal 20 can be accurately welded to the positive electrode lead 40A.

Similarly to the positive electrode terminal 20, the negative electrode terminal 21 is welded to the contacting part 47 of the negative electrode lead 40B to mechanically and electrically join it to the negative electrode lead 40B.

As shown in FIGS. 8 and 9, the insulating member 50 is disposed between the electrode assembly 30 and the lid body 14, and the outer circumferential surface of the insulating member 50 is close to and faces the inner surface of the container body 16. The second extended part 45 of the positive electrode lead 40A and the second extended part 45 of the negative electrode lead 40B are in contact with the inner surfaces of the insulating members 50a and 50b, respectively. The positive electrode current collecting tabs 32a are welded to the inner surface of the second extended part 45, and the negative electrode current collecting tabs 32b are welded to the inner surface of the second extended part 45 of the negative electrode lead 40B.

Accordingly, the electrode assembly 30 is electrically connected to the positive electrode terminal 20 through the positive electrode current collecting tabs 32a and the positive electrode lead 40A, and further, electrically connected to the negative electrode terminal 21 through the negative electrode current collecting tabs 32b and the negative electrode lead 40B.

The positive electrode terminal 20 and the positive electrode lead 40A do not protrude from the electrode assembly 30 in the longitudinal direction X, and are positioned so that they substantially entirely face the upper end surface of the electrode assembly 30 in the height direction Z. Similarly, the negative electrode terminal 21 and the negative electrode lead 40B do not protrude from the electrode assembly 30 in the longitudinal direction X, and are positioned so that they substantially entirely face the upper end surface of the electrode assembly 30 in the height direction Z. This makes it possible to reduce a dead space in the outer container 12 and obtain a secondary battery having a high energy density.

In the secondary battery 10 configured as described above, the output terminals (positive and negative electrode terminals) each have the exposed part 20E exposed to the outside through an opening in the lid body 14, and the exposed part 20E is provided with the pair of through holes 23 having openings facing the outside of the outer container. When molding the lid body 14 with the output terminals embedded therein by, for example, insert molding, the output terminals can be positioned with respect to the mold using the through holes 23. Accordingly, the output terminals can be positioned more accurately with respect to the lid body 14.

Further, when welding each output terminal to the corresponding electrode lead, since a welding position can be determined with respect to the through holes 23, the desired part of the output terminal can be accurately welded to the electrode lead, and welding accuracy can be improved. Since the contacting part 47 of each electrode lead is provided with the characteristics a spring, the contacting part 47 is brought into close contact with the output terminal, and the reliability of connection between the electrode lead and the output terminal improves.

The positive and negative electrode leads 40A and 40B have the engaging protrusions 48 and 49 protruding in a surface direction of the base part 41, and these engaging protrusions are each engaged with and supported by the upper edge of the corresponding side wall of the container body. That is, the positive and negative electrode leads are supported and positioned by the container body. Therefore, at the time the lid body 14 is joined to the container body, even when loads are applied to the positive and negative electrode leads 40A and 40B, the leads can be held and fixed in place without being displaced.

The positive and negative electrode leads 40A and 40B are oriented so that their orientations in a planar direction are inverted 180 degrees from each other. In other words, the positive and negative electrode leads 40A and 40B are formed and disposed so that they are axially symmetric with respect to a central axis C (see FIG. 2) of the secondary battery 10 in the height direction Z. The pair of leads are symmetrically engaged with the pair of long side walls 16a and 16b of the container body 16. Therefore, the lid body 14 can be joined to the pair of long side walls 16a and 16b with the same strength, and the strength of the joints of the outer container 12 can be improved.

It can be seen from the above that, according to the first embodiment, it is possible to obtain a secondary battery in which the output terminals and leads can be connected more accurately and reliably.

Next, a secondary battery according to another embodiment of the present invention will be described. Parts and components of the other embodiment described below that are the same as those of the first embodiment described above are denoted by the same reference numerals used in the first embodiment. The description thereof will be omitted or simplified, and differences from the first embodiment will be mainly discussed.

### (Second embodiment)

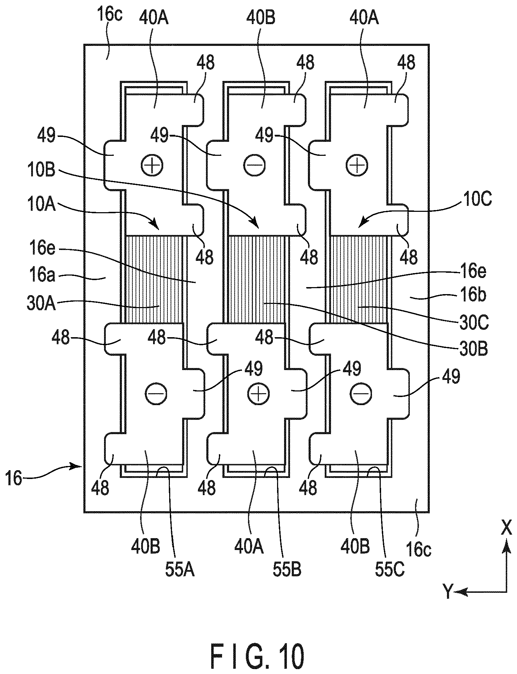

FIG. 10 is a plan view illustrating the secondary battery according to a second embodiment with a lid body omitted.

According to the present embodiment, the secondary battery is configured as an assembled battery including a plurality of, for example, three secondary batteries 10A, 10B, and 10C. A container body of an outer container 12 includes a pair of long side walls 16a and 16b facing each other, a pair of side walls 16C facing each other, and two partition walls 16e standing between the pair of long side walls 16a and 16b. The long side walls 16a and 16b and the partition walls 16e are arranged in parallel to each other at equal intervals in the width direction Y. As a result, three housing chambers 55A, 55B, and 55C are formed in the container body 16.

An electrode assembly 30A is housed in the housing chamber 55A. Positive and negative electrode leads 40A and 40B are disposed on top of the electrode assembly 30A, and are each connected to current collecting tabs of the electrode assembly 30A. The electrode assembly 30A and the positive and negative electrode leads 40A and 40B constitute a secondary battery 10A.

The positive and negative electrode leads 40A and 40B are oriented so that their orientations in the planar direction are inverted 180 degrees from each other. A first engaging protrusion 49 of the positive electrode lead 40A is supported by a recess in the long side wall 16a, and a pair of second engaging protrusions 48 are supported by recesses in the partition wall 16e. A first engaging protrusion 49 of the negative electrode lead 40B is supported by a recess in the partition wall 16e, and a pair of second engaging protrusions 48 are supported by recesses in the long side wall 16a.

An electrode assembly 30B is housed in the housing chamber 55B. Positive and negative electrode leads 40A and 40B are disposed on top of the electrode assembly 30B, and are each connected to current collecting tabs of the electrode assembly 30B. The electrode assembly 30B and the positive and negative electrode leads 40A and 40B constitute a secondary battery 10B.

The positive and negative electrode leads 40A and 40B are oriented so that their orientations in the planar direction are inverted 180 degrees from each other. The positive electrode lead 40A is positioned next to the negative electrode lead 40B of the secondary battery 10A in the width direction Y, and has the same orientation as the negative electrode lead 40B of the secondary battery 10A. The negative electrode lead 40B is positioned next to the positive electrode lead 40A of the secondary battery 10A in the width direction Y, and has the same orientation as the positive electrode lead 40A of the secondary battery 10A.

That is, a first engaging protrusion 49 of the positive electrode lead 40A is supported by a recess in the partition wall 16e on the long side wall 16b side, and a pair of second engaging protrusions 48 are supported by recesses in the partition wall 16e on the long side wall 16a side. A first engaging protrusion 49 of the negative electrode lead 40B is supported by a recess in the partition wall 16e on the long side wall 16a side, and a pair of second engaging protrusions 48 are supported by recesses in the partition wall 16e on the long side wall 16b side.

An electrode assembly 30C is housed in the housing chamber 55C. Positive and negative electrode leads 40A and 40B are disposed on top of the electrode assembly 30C, and are each connected to current collecting tabs of the electrode assembly 30C. The electrode assembly 30C and the positive and negative electrode leads 40A and 40B constitute a secondary battery 10C.

The positive and negative electrode leads 40A and 40B are oriented so that their orientations in the planar direction are inverted 180 degrees from each other. The positive electrode lead 40A is positioned next to the negative electrode lead 40B of the secondary battery 10B in the width direction Y, and has the same orientation as the negative electrode lead 40B of the secondary battery 10B. The negative electrode lead 40B is positioned next to the positive electrode lead 40A of the secondary battery 10B in the width direction Y, and has the same orientation as the positive electrode lead 40A of the secondary battery 10B.

That is, a first engaging protrusion 49 of the positive electrode lead 40A is supported by a recess in the partition wall 16e on the long side wall 16b side, and a pair of second engaging protrusions 48 are supported by recesses in the long side wall 16b. A first engaging protrusion 49 of the negative electrode lead 40B is supported by a recess in the long side wall 16b, and a pair of second engaging protrusions 48 are supported by recesses in the partition wall 16e on the long side wall 16b side.

As described above, in the three secondary batteries 10A, 10B, and 10C, the three positive electrode leads 40A are arranged in a staggered pattern in the width direction Y, and the three negative electrode leads 40B are arranged in a staggered pattern in the width direction Y. As a result, the positive and negative electrode leads 40A and 40B provided on one end side in the longitudinal direction X are alternately arranged and have the same orientation. The negative and positive electrode leads 40B and 40A provided on the other end side in the longitudinal direction X are alternately arranged in a state where they have the same orientation, which is opposite to the orientation of the above-described three electrode leads.

In the second embodiment, the rest of the configuration of the secondary batteries 10A, 10B, and 10C is the same as that of the secondary battery 10 according to the first embodiment.

According to the second embodiment configured as described above, even in the case of an assembled battery having a plurality of secondary batteries, the upper end surfaces of the long side walls 16a and 16b and the partition walls 16e can provide a sufficient joining area, and therefore the strength of the joints between the container body and the lid body (not shown) can be increased. This makes it possible to obtain a secondary battery with improved reliability.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

In the embodiments described above, the positive and negative electrode leads have the same shape and configuration, but the present invention is not limited thereto, and instead they may have different shapes. The second engaging protrusions of the leads do not need to be provided in pairs, and a single second engaging protrusion may be provided instead. The electrode assembly is not limited to a so-called stacked electrode assembly formed by stacking a plurality of electrode plates in the thickness direction, and a so-called wound electrode assembly formed by winding an electrode plate may be applied. The material, shape, size, and the like of the elements constituting the secondary battery are not limited to those of the above-described embodiments, and can be changed in various ways as necessary.

## Claims

1. A secondary battery comprising:
an outer container (12) having a lid body (14);
an electrode assembly (30) including a current collecting tab (32a) and housed in the outer container;
an output terminal (20) provided in the lid body; and
a lead (40A) provided between the electrode assembly and the lid body in the outer container to electrically connect the current collecting tab and the output terminal,
**characterized in that**:
the output terminal (20) includes a connection part (20c) that is exposed to the outside of the lid body (14) and connectable with a connection member, an exposed part (20E) exposed to the outside of the lid body, and a through hole (23) formed in the exposed part, and the exposed part is joined to the lead.

2. The secondary battery of claim 1, **characterized in that** the output terminal (20) includes a first layer (20a) made of a same kind of metal as the lead (40A) and including the exposed part (20E), and a second layer (20b) made of a kind of metal different from that of the lead, laminated over a region of the first layer excluding the exposed part, and including the connection part (20c).

3. The secondary battery of claim 1 or 2, **characterized in that** the lead (40A) includes a base part (41) having a contacting surface (41a) facing the lid body, a first engaging protrusion (49) located in a same plane as the contacting surface and protruding from the base part in a first direction, and a second engaging protrusion (48) located in a same plane as the contacting surface and protruding from the base part in a second direction different from the first direction,
the outer container (12) includes a container body (16) having a pair of long side walls (16a, 16b) facing each other with a gap therebetween and an opening (17) formed between edges of the pair of long side walls on a same side, and the lid body (14) is fixed to the edges of the pair of long side walls to close the opening, and
the base part (41) of the lead is located between the pair of long side walls, and the first engaging protrusion is supported by the edge of one of the long side walls and the second engaging protrusion is supported by the other long side wall.

4. The secondary battery of claim 1, 2 or 3, **characterized in that** the output terminal includes a positive electrode terminal (20) provided at one end of the lid body and a negative electrode terminal (21) provided at the other end of the lid body, the lead includes a positive electrode lead (40A) connected to the positive electrode terminal and a negative electrode lead (40B) connected to the negative electrode terminal, and
the positive and negative electrode leads (40A, 40B) are arranged so that orientations of the first and second engaging protrusions (48, 49) are axially symmetric with respect to an axis in a height direction of the container body (16).

5. The secondary battery of claim 1, **characterized in that** the lead (40A) includes a base part (41) having a contacting surface (41a) facing the lid body (14), and a contacting part (47) protruding from the base part toward the lid body to be in contact with the exposed part (20E) of the output terminal (20), the contacting part having a characteristic of a spring.

6. The secondary battery of claim 5, **characterized in that** the lid body (14) has an opening (OP1) penetrating the lid body in a thickness direction,
the output terminal (20) is embedded in the lid body and extends across the opening,
the exposed part (20E) is exposed on an outer surface and an inner surface of the lid body through the opening, and
the contacting part (47) of the lead (40A) protrudes into the opening (OP1) to be in contact with the exposed part.
